Europäisches Patentamt

European Patent Office

Office européen des brevets

(19)

(11) Publication number: **0 028 518**
A1

(12)

# EUROPEAN PATENT APPLICATION

(21) Application number: 80303888.4

(22) Date of filing: 31.10.80

(51) Int. Cl.³: **A 23 J 1/12**
**A 23 J 1/00**

(30) Priority: 05.11.79 CA 339195

(43) Date of publication of application:
13.05.81 Bulletin 81/19

(84) Designated Contracting States:
AT BE CH DE FR GB IT LI LU NL SE

(71) Applicant: DU PONT CANADA INC.
Box 2200 Streetsville Postal Station
Mississauga Ontario L5M 2H3(CA)

(72) Inventor: Woloshyn, Stephen
226 Indian Road
Kingston Ontario K7M 1T5(CA)

(74) Representative: Ellis, John Clifford Holgate et al,
MEWBURN ELLIS & CO. 70-72 Chancery Lane
London WC2A 1AD(GB)

(54) Process for the separation of endosperm from comminuted oat bran.

(57) An admixture of oat bran having endosperm attached thereto in a suitable solvent is subjected to the influence of a dispersion means and then endosperm is separated from the resultant admixture. The dispersion means is of the type adapted to subject the bran to the effects of impact and attrition in the substantial absence of shear. The bran and endosperm obtained are capable of being used in the food industry.

EP 0 028 518 A1

Croydon Printing Company Ltd.

- 1 -

## PROCESS FOR THE SEPARATION OF ENDOSPERM
## FROM COMMINUTED OAT BRAN

The present invention relates to a process for the treatment of comminuted oats and especially to a process for the separation of endosperm from comminuted oat bran having endosperm attached thereto. The comminuted oat bran may be in the form of, for example, comminuted groats or a bran fraction derived therefrom.

As used herein the expression "groats" refers to the kernel of the oat, the expression "flour" refers to the endosperm of the oat and the expression "bran" refers to the bran of the oat. The expression "gum" refers in particular to water-soluble gum.

Oats are a potential source of a wide variety of useful products. Examples of such products are flour, starch, protein isolate and concentrate, protein-enriched flour, bran, gum and oil. Traditional techniques used in the cereal grain processing industry are frequently difficult to use with oats. For example, milling processes are difficult to use with oats because of process problems relating to the presence of oil in the oats. Moreover, unless the oats are de-oiled prior to milling, such milling processes would result in the formation of flour and bran fractions containing oil which may result in the development of rancidity on storage of the flour and bran.

A process for the separation of a flour fraction, a bran fraction and oil from comminuted oats in which gum does not cause significant process problems and in which the flour is essentially free of gum is disclosed in U.S. 4 211 801 (R.W. Oughton) issued 8th July 1980 to the applicant company.

One of the products of the aforementioned process of R.W. Oughton is a bran fraction. The bran of that fraction tends to have endosperm attached to it. The technique for separation of such endosperm from bran that is disclosed in Example XIII of the aforementioned patent resulted in the separation of an endosperm fraction that was 20% by weight of the bran fraction used as starting material and which contained 13% by weight of the total protein in that bran fraction. The starting material contained 24.2% protein which was 59% of the protein in the oats from which it was derived.

A process capable of separating a higher proportion of the endosperm, and protein, from bran having endosperm attached thereto has now been found.

Accordingly the present invention provides a process for the separation of endosperm from comminuted oat bran having endosperm attached thereto, said process comprising :

(a) subjecting an admixture of said bran and a solvent to the influence of dispersion means, said dispersion means being adapted to subject the bran to the effects of impact and attrition in the substantial absence of shear and said solvent being selected from the group consisting of pentane, hexane, heptane, cyclohexane, alcohols having 1-4 carbon atoms and normally liquid chlorofluoro carbons containing 1-2 carbon atoms, and mixtures thereof, and

(b) separating endosperm from the resultant admixture.

.

In a preferred embodiment of the process of the present invention the bran of (a) is obtained by sieving an admixture of comminuted oats in the solvent.

In another embodiment the endosperm is separated in (b) by sieving the product of (a).

The comminuted bran having endosperm attached thereto may be in the form of comminuted groats or a bran fraction derived therefrom. The comminution of oats, preferably dehulled oats i.e. groats, is known in the art. The oats are comminuted in order to facilitate extraction of oil and to facilitate the separation of comminuted oats into fractions. Conventional comminuting techniques, for example, pinmilling, hammer milling, corrugated rollers and other shearing techniques, would appear to produce acceptable comminuted groats. In addition the groats may be comminuted so as to be in the form of flakes by using smooth rollers or other crushing or flaking means.

In a preferred embodiment of the present invention the bran fraction is a bran fraction, having endosperm attached thereto, that has been derived from comminuted oats. For example the bran fraction may be a bran fraction obtained from the aforementioned process of R.W. Oughton, especially a bran fraction obtained by sieving. Alternatively the bran fraction is a fraction that has been obtained by other means e.g. by air classification techniques.

In the process of the invention the bran fraction is in admixture with a solvent for the oil in the oats. The solvent should be acceptable for use with food e.g.

be non-toxic at the levels remaining in the products produced, not cause the formation of toxic materials in the product and not have a significant deleterious effect on the nutritional value of the product. The amount and type of solvent remaining in products offered for sale must be acceptable to the appropriate health authorities, as will be understood by those skilled in the art. Examples of solvents are pentane, hexane, heptane, cyclohexane, alcohols of 1-4 carbon atoms and normally liquid chlorofluorocarbons of 1-2 carbon atoms, and mixtures thereof; as used herein the solvents hexane and heptane include those solvents referred to in the food industry as hexane and heptane. The preferred solvents are the hydrocarbon solvents especially hexane.

In the process an admixture of the bran and solvent are subjected to the influence of dispersion means. The dispersion means are adapted to subject the bran to the effects of impact and attrition in the substantial absence of shear. An example of such a dispersion means is shown in the drawings in which :

Fig. 1 is a schematic representation of a section of part of a dispersion means; and

Fig. 2 is a schematic representation of the dispersion means of Fig. 1 as viewed in the direction of arrows 2-2.

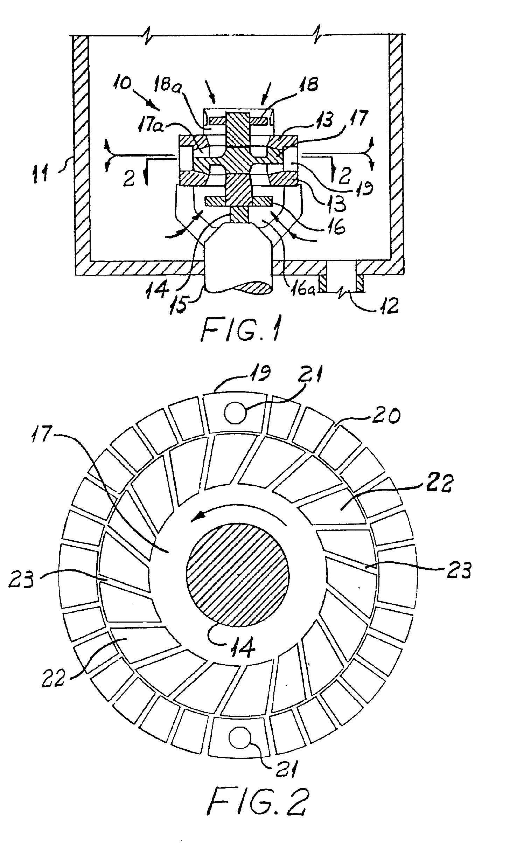

With reference to Fig. 1 the dispersion means, generally indicated by 10, is positioned in a vessel 11 having an inlet (not shown) and an outlet 12, outlet 12 being capable of being closed (not shown). Dispersion means 10 has a housing 13 that envelops drive shaft 14. Drive shaft 14, which is connected to drive means (not shown), projects through base 15 and extends axially throughout housing 13 without extending beyond housing 13. Drive shaft 14 has located thereon, as it extends from base 15, a lower agitation propeller 16, a rotor 17 and upper agitation propeller 18, each of which are located in a chamber, 16a, 17a and 18a respectively, in housing 13. Chambers 16a, 17a and 18a are in fluid-flow communication with each other and with vessel 11. Lower agitation propeller 16 is spaced apart from base 15. The two propellers 16 and 18, are adapted to feed matter in vessel 11 towards rotor 17.

Rotor 17 is centrally located in housing 13 and is radially located inside stator 19. Stator 19 surrounds chamber 17a and is attached to housing 13. Rotor 17 and stator 19 are shown in greater detail in Fig. 2.

As shown by Fig. 2 stator 19 has a plurality of slots 20 which pass radially through stator 19. Stator 19 is attached to housing 13 (not shown) by attachment means 21. Rotor 17, attached to drive shaft 14, has a raised outer edge 22, as can also be seen in Fig. 1, through which rotor slots 23 pass. Rotor slots 23 are not radial slots but slots that angle backwards from the direction of rotation of rotor 17.

Dispersion means of the type described with reference to the drawings are available from Kinetic Dispersion Corporation, of Buffalo, N.Y., under the trade mark KADY MILL. Such dispersion means are understood to subject particles to impact and attrition in the substantial absence of shear.

In operation of the dispersion means described above in accordance with the process of the present invention an admixture of the bran and solvent is formed in vessel 11 e.g. by feeding an admixture or by feeding bran and solvent separately in a batch, semi-continuous or, preferably, a continuous manner. Drive shaft 14 of the dispersion means is rotated rapidly, for example so that the rim speed of rotor 17 is about 2600 meters/minute, whereby lower agitation propeller 16 and upper agitation propeller 18 each feed the admixture towards rotor 17. The admixture is then forced through rotor slots 23 and through slots 20 of stator 19. The direction of flow of the admixture in vessel 11 is shown generally by the arrows in Fig. 1.

When the dispersion means is operated in a continuous or semi-continuous manner it is preferred that the outlet from vessel 11 be shielded from the inlet to that vessel so as to reduce the tendency for, or prevent, oat bran to pass from the inlet to the outlet without being subjected at least once to the dispersion means.

In dispersion means of the type shown in the drawings particles in the admixture pass from rotor slots 23 of the rapidly rotating rotor 17 into slots 20 of the stationary stator 19. The particles impact against the walls of slots 20, probably several times, before passing out of slots 20. Such impact, and accompanying attrition, occurs in the substantial absence of shear.

- 7 -

In step (a) of the process of the invention, the admixture, which preferably contains less than 40% solids by weight, is subjected to the influence of the dispersing means for a period of time depending on the operating conditions and the amount of endosperm to be separated from the bran. The operation of step (a) may depend on a number of variables, for example, the source of the bran fraction having endosperm attached thereto, the amount of bran fraction in admixture with solvent i.e. the solids concentration, the mode of operation of the dispersion means e.g. batch or continuous, the period of time during which the admixture is subjected to the influence of the dispersing means and the actual dispersion means used. The amount of endosperm separated from bran having endosperm attached thereto will depend in particular on the operation and control of step (a) of the process.

In step (b) of the process endosperm is separated from the admixture subjected to the influence of the dispersion means. A variety of techniques may be used to separate the endosperm, examples of which are disclosed by R.W. Oughton in the aforementioned US 4 211 801. A preferred method of separating the endosperm is the use of a sieve, as disclosed by R.W. Oughton, whereby an admixture of endosperm and solvent passes through the sieve while bran is retained on the sieve. In step (a) of the process the dispersion means tends to cause separation of endosperm from bran, but it is possible that at the same time the particles of bran will become further comminuted.

Thus, if separation of endosperm is by means of a sieve, the mesh size of the sieve and the operation of step (a) of the process should be controlled so as to obtain endosperm that can be effectively separated from the bran e.g. so that the endosperm contains an acceptably low level of bran particles. A sieve having a fine mesh e.g. a 200 mesh or finer TYLER (Trade Mark) sieve, is preferred.

In an embodiment the comminuted oat bran having endosperm attached thereto that is used in the process of the invention is such oat bran that has been derived from comminuted groats. Techniques for the separation of oat bran from comminuted groats are known, for example the techniques described in the aforementioned US 4 211 801. In particular comminuted groats may be separated into an endosperm fraction and a bran fraction using a sieve having a fine mesh e.g. a 200 mesh or finer TYLER sieve, the bran fraction so obtained being oat bran having endosperm attached thereto.

In another embodiment the comminuted oat bran having endosperm attached thereto that is used in the process of the present invention is in the form of comminuted groats per se. Such comminuted oat bran may be subjected to the influence of the dispersion means so that subsequently a more effective separation of endosperm and bran may be obtained, compared with that obtained in the absence of the use of the dispersion means.

In a further embodiment the comminuted oat bran may be comminuted groats that is in the form of flakes. Such flakes may be admixed with solvent for a period of time sufficient to substantially de-oil the groats while at the same time subjecting the groats to dispersion means.

Alternatively, the flakes may be admixed with the solvent in a manner that minimizes comminution of the flakes, thereby facilitating separation of oil-bearing miscella from the flaked groat prior to further comminution of the flakes.

The flakes, preferably de-oiled flakes, may be subjected to a dispersion means capable of effecting the finally required separation of endosperm from bran. Alternatively the flaked may be subjected to a dispersion means so as to partially effect separation of endosperm and bran. Subsequently, endosperm may be separated therefrom and then the resultant bran may be further subjected to the influence of dispersion means. Thus in an embodiment groats may be comminuted into the form of flakes, extracted with solvent to effect substantial de-oiling of the flakes and then subjected at least once to dispersion means so that the separation of bran and endosperm may be effected.

The process of the present invention may be used for the separation of endosperm from oat bran having endosperm attached thereto. The bran may be used in breakfast cereals or as a filler for meat products or pet foods. The endosperm may be subjected to separation into proteinaceous fractions or used in breakfast cereals, baby food and the like.

The present invention is illustrated by the following examples.

- 10 -

EXAMPLE I.

A sample of dehulled Hinoat oats (groats) was passed five times through a STURTEVANT (Trade Mark) roller mill having rollers 20 cm in diameter and 12.5 cm in width. The mill was operated with a roller gap of 75 μm and a roll speed differential of 2.4:1, the fast roller being operated at 540 rpm. The resultant material was admixed with hexane, as a slurry, and passed through a SWECO (Trade Mark) Vibro Energy separator equipped with a 200 mesh TYLER (Trade Mark) screen. The bran retained on the screen was washed with hexane to remove free endosperm. The resultant bran was 29.8%, by weight, protein and it contained 35.4%, by weight, of the total available protein.

The bran was subjected to a Model L KADY MILL dispersion means, on a batch basis, as a 20% by weight admixture in hexane for a period of 4 minutes. The dispersion means had an 8-slot rotor obtained from the manufacturer. The resultant admixture was fed to a 200 mesh TYLER hand screen. The bran obtained contained 22.9%, by weight, protein and 16.1%, by weight, of the total available protein. Thus a process of the present invention resulted in the separation of an extra 19.3% of the total available protein i.e. separation of 55% of the protein in the washed bran fed to the process.

EXAMPLE II

A sample of dehulled Hinoat oats (groats) was passed two times through a COMOMIL (Trade Mark) comminution mill equipped with a punched hole screen having 1.9 mm diameter holes. The resultant material was admixed with hexane, as a slurry, and passed through a SWECO Vibro Energy separator equipped with a 200 mesh TYLER screen. The bran retained on the screen was washed with hexane to remove free endosperm. The resultant bran was 29.7% by weight, protein and it contained 52.4%, by weight, of the total available protein.

The bran was subjected to a Model 00 KADY MILL dispersion means, on a batch basis, as a 20% by weight admixture in hexane for a period of 5 minutes/U.S. gallon (3.785 litres). The resultant admixture was fed to the SWECO Vibro Energy separator. The bran obtained contained 24.5%, by weight, protein and 18.1%, by weight, of the total available protein. Thus a process of the present invention resulted in the separation of an extra 34.3% of the total available protein i.e. separation of 66% of the protein in the washed bran fed to the process.

## EXAMPLE III

A sample of dehulled Hinoat oats (groats) was roller milled, admixed in the form of a slurry with hexane and fed to the SWECO Vibro Energy separator using the procedure of Example I. The bran obtained, which was not washed to remove free endosperm, contained about 27%, by weight, protein. The endosperm obtained was about 55% of the groats.

Portions of the bran were admixed with hexane and subjected to a Model L KADY MILL dispersion means for periods of 4, 8 or 12 minutes. Solids concentrations of 20, 30 and 40%, by weight, were used. Bran was subsequently separated from endosperm using the procedure of Example I.

The results obtained, which are summarized in TABLE I, show that higher separations were obtained at higher solids concentrations.

EXAMPLE IV

A sample of dehulled Hinoat oats (groats) was roller milled using the procedure of Example I. The resultant comminuted groat was admixed with hexane and subjected to a Model L KADY MILL dispersion means for periods of 4, 8 or 12 minutes. Solids concentrations of 20, 30 and 40%, by weight, were used. Bran was subsequently separated from endosperm using the procedure of Example I.

The results obtained, which are summarized in TABLE II, appear to show that the solids concentration had little effect on the amount of endosperm separated but that the period of time did affect the separation of endosperm. The results for the separation of endosperm were comparable to those of Example III, where endosperm had been separated from bran prior to subjecting the bran to a process of the invention. Moreover the results obtained were superior to the separation of endosperm from bran in Example III using the SWECO Vibro Energy separator i.e. in the absence of the use of a process of the present invention.

TABLE I

| Run No. | Time (min) | Solids Concentration | Protein in Bran (%) (Actual) | Protein in Bran (% of Total Available) | Protein in Endosperm (%) | Endosperm Separated from Groats (%) |
|---|---|---|---|---|---|---|
| 1 | 4 | 20 | 22.9 | 14.6 | 29.4 | 73.7 |
| 2 | 4 | 30 | 21.9 | 13.9 | 32.7 | 73.1 |
| 3 | 4 | 40 | 20.5 | 13.0 | 33.1 | 76.1 |
| 4 | 8 | 20 | 21.7 | 15.2 | 34.3 | 73.8 |
| 5 | 8 | 30 | 17.6 | 12.1 | 29.9 | 75.3 |
| 6 | 8 | 40 | 20.0 | 10.3 | 33.4 | 73.9 |
| 7 | 12 | 20 | 21.4 | 11.8 | 32.5 | 74.7 |
| 8 | 12 | 30 | 20.5 | 10.8 | 31.3 | 74.9 |
| 9 | 12 | 40 | 19.3 | 9.7 | 30.3 | 72.7 |

TABLE II

| Run No. | Time (min) | Solids Concentration | Protein in Bran (%) (Actual) | Protein in Bran (% of Total Available) | Protein in Endosperm (%) | Endosperm Separated from Groats (%) |
|---|---|---|---|---|---|---|
| 10 | 4 | 20 | 21.7 | 17.6 | 19.6 | 73.3 |
| 11 | 4 | 30 | 22.9 | 17.7 | 19.9 | 72.9 |
| 12 | 4 | 40 | 20.8 | 16.3 | 22.1 | 73.7 |
| 13 | 8 | 20 | 21.9 | 16.1 | 21.7 | 76.6 |
| 14 | 8 | 30 | 21.7 | 15.5 | 21.0 | 72.9 |
| 15 | 8 | 40 | 22.1 | 15.7 | 19.9 | 74.5 |
| 16 | 12 | 20 | 20.6 | 13.2 | 22.7 | 77.4 |
| 17 | 12 | 30 | 20.6 | 14.3 | 20.6 | 74.6 |
| 18 | 12 | 40 | 20.7 | 13.1 | 21.2 | 76.7 |

0028518

- 15 -

EXAMPLE V

A sample of dehulled Hinoat oats (groats) was roller milled using the procedure of Example I. The resultant comminuted groat was admixed with hexane in 18.9 litre batches at a solids concentration of 20% by weight. The batches were subjected to a Model OO KADY MILL dispersion means for periods of 5, 10, 15 or 20 minutes. Bran was subsequently separated from endosperm using the procedure of Example I.

The results obtained were as follows :

| Run No. | Time (minutes) | Protein in Bran (% of Total Available*) | Protein in Endosperm (% of Total Available*) |
|---|---|---|---|
| 19 | 5 | 30.2 | 64.9 |
| 20 | 10 | 19.1 | 76.1 |
| 21 | 15 | 17.2 | 77.7 |
| 22 | 20 | 17.3 | 77.7 |

* based on the bran, endosperm and oil fractions obtained.

The results show that time was an important factor in the separation of endosperm from bran.

EXAMPLE VI

A sample of dehulled Hinoat oats was flaked using a STURTEVANT roller mill equipped with smooth rollers and operated with no speed differential between the rollers. Oat oil was then extracted from the resultant flakes using hexane as the solvent. The flaking and extraction steps were conducted so that comminution of the oats was minimized.

A 31 litre sample, containing 25 weight percent solids, of the flaked de-oiled oats in hexane was subjected to a Model 00 KADY MILL dispersion means. Samples were taken periodically and bran was separated from endosperm using the procedure of Example I.

The results obtained were as follows :

| Time (Minutes) | Separation of Endosperm (% to total available) |
|---|---|
| 0 | ca 0 |
| 2 | 62 |
| 4 | 66 |
| 10 | 73 |
| 20 | 77 |

The results show that 70% of the total available endosperm in flaked de-oiled oats may be separated in less than 10 minutes in a KADY MILL dispersion means.

- 17 -

CLAIMS :

1. A process for the separation of endosperm from comminuted oat bran having endosperm attached thereto, characterised by the steps of :

(a) subjecting an admixture of said bran and a solvent to the influence of dispersion means, said dispersion means being adapted to subject the bran to the effects of impact and attrition in the substantial absence of shear and said solvent being selected from the group consisting of pentane, hexane, heptane, cyclohexane, alcohols having 1-4 carbon atoms and normally liquid chlorofluoro carbons containing 1-2 carbon atoms, and mixtures thereof, and

(b) separating endosperm from the resultant admixture.

2. The process of Claim 1 in which the comminuted oat bran is in the form of comminuted dehulled oats.

3. The process of Claim 1 in which the comminuted oat bran has been derived from comminuted dehulled oats.

4. The process of Claim 2 in which the comminuted oat bran is in the form of flakes of comminuted dehulled oats.

5. The process of any one of Claims 1 to 4 in which the admixture of bran and solvent is obtained by sieving an admixture of comminuted dehulled oats and solvent and using the bran fraction so obtained as the bran of step (a) of the process.

6. The process of any one of Claims 1 to 4 in which the separation of step (b) involves the use of a sieve.

7. A process for the separation of endosperm from comminuted oat bran having endosperm attached thereto, characterised by the steps of :

(a) admixing comminuted dehulled oats with a solvent, said solvent being selected from the group consisting of pentane, hexane, heptane, cyclohexane, alcohols having 1-4 carbon atoms and normally liquid chlorofluoro carbons containing 1-2 carbon atoms, and mixtures thereof, and said comminuted dehulled oats being in the form of flakes;

(b) separating said flakes from said solvent;

(c) admixing the flakes so separated with further solvent and subjecting the admixture so obtained to the influence of dispersion means, said dispersion means being adapted to subject the flakes to the effects of impact and attrition in the substantial absence of shear; and

(d) separating endosperm from the resulting admixture.

8. The process of Claim 7 in which the separation of step (d) involves the use of a sieve.

9. The process of Claim 7 or Claim 8 in which the admixture remaining after separation of endosperm in step (d) is subjected to the influence of dispersion means and further endosperm is separated from the admixture so obtained.

10. The process of any one of Claims 1 to 9 in which the solvent is selected from the group consisting of pentane, hexane, heptane and cyclohexane, and mixtures thereof.

11. The process of any one of Claims 1 to 9 in which the solvent is a normally liquid chlorofluorocarbon containing 1-2 carbon atoms.

FIG.1

FIG.2

European Patent
Office

**EUROPEAN SEARCH REPORT**

Application number

EP 80 30 3888

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 615 655 (J.E. FREEMANS et al.) <br><br> * column 2, line 36 to column 4, line 4; column 4, lines 63-75; claims 3 and 5 * <br> --- <br> AU - B - 459 425 (TRUMAN B. WAYNE) <br><br> * page 5, paragraphs 2,3; page 14, paragraph 2 - page 16, paragraph 2; page 20, paragraph 2; page 21, paragraph 4; page 23, paragraph 3; page 25, paragraph 2 to page 26, paragraph 2; page 28, paragraph 2; page 30, paragraph 2, claims 1-4 * <br> & US - A - 3 519 431 <br> --- <br> FR - A - 2 351 704 (DU PONT OF CANADA LTD.) <br><br> * page 4, line 17 to page 7, line 29 * <br> & US - A - 4 211 695 <br> --- <br> US - A - 3 816 389 (SHIGETOSHI M. et al.) <br><br> * column 2, line 55 to column 4, line 64 * <br> --- | 1,5-9 <br><br><br><br> 1,5-11 <br><br><br><br><br><br><br><br><br><br> 1,3,10 <br><br><br><br><br> 1,6-8 | A 23 J 1/12 <br> A 23 J 1/00 <br><br><br><br><br> **TECHNICAL FIELDS SEARCHED (Int. Cl.³)** <br><br> A 23 J 1/12 <br>        1/14 <br>        1/00 <br> A 23 L 1/10 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09.02.1981 | SCHUERMANS |

EPO Form 1503.1  06.78